# EUROPEAN PATENT APPLICATION

(11) **EP 2 610 561 A1**
(43) Date of publication of application: **03.07.2013**
(21) Application number: 10856338.8
(22) Date of filing: 26.08.2010
(51) Int. Cl.: F24J 2/54, F24J 2/12, F24J 2/38

(54) **SUPPORT SYSTEM FOR PARABOLIC SOLAR CONCENTRATING COLLECTORS**

(30) Priority: 26.08.2010 ES 201031287
(71) Applicant: Guradoor, S.L., 38390 Santa Úrsula (Tenerife) (ES)
(72) Inventor: GONZÁLEZ GONZÁLEZ, Daniel, E-38390 Santa Úrsula (Tenerife) (ES)
(74) Representative: Gil-Vega, Victor
(86) International application number: PCT/ES2010/070572
(87) International publication number: WO 2012/025643

(57) **Abstract**

The collector rests on a ball joint by means of which it is connected to the ground, said ball joint being surrounded by a series of hydraulic arms arranged in two imaginary concentric rings. The aforementioned arms are hinged at the ends thereof to the collector and the corresponding foundation. In addition, the structure is stabilized by at least four towers (12) connected in pairs by a cable (13) that follows a closed path and is rigidly secured to the structure (2) at two diametrically opposed points of attachment (14), in such a way that the collector is pulled in one direction or another by means of multiple pulleys associated with the lower and upper ends of each of the two opposing towers, said cable passing through a braking means (17).

## Description

### Object of the invention

This invention relates to a supporting system for solar thermal collectors, which has been specifically designed to support, guide and stabilize a parabolic trough system. Consequently, the invention falls within the scope of the devices intended for the effective use of solar power.

The object of the invention is to provide a supporting system for the parabolic trough, which is extremely efficient and stable.

### Background of the invention

Within the field of the practical application of the invention, there is a wide variety of well known devices intended for an effective use of solar power, and among them, there are three basic types that must be highlighted: flat plate collectors, tube collectors and parabolic troughs.

In any of the three cases, these devices are supplemented by means of a supporting structure which serves them to attach the devices, either to the ground or to their assembly site; usually, and to obtain an optimal use, the orientation of such supporting structure can be automatically adjusted, on the basis of the relative position of the sun, to obtain at all times the optimum angle of incidence of sun rays on the collector, thus achieving the most energetic-efficient use of the device.

While these methods of self-orientation are relatively simple to apply in the first two types of devices described above, this is not the case of parabolic collectors or troughs, since they have a much more complex structure. Consequently, although these devices are orientated by means of hydraulically operated arms, in most cases their stabilization is not sufficient, which poses limitations to the design of the collector in terms of dimensions and, to a large extent, determines the conditions of the installation ground.

ES 1 066 621, "Solar panels system", describes a system which comprises a structural supporting frame for solar panels, tiltably mounted around a horizontal mid axis fixed to a set of supports and aligned in the direction of one of the two larger dimensions thereof, such structural frame being provided, correspondingly with two opposite points of the solar panels arrangement, with two connectors which, through a pair of swivel connections, attach one of such connectors to one of the ends of a first floating conductor section which at the other end comprises another swivel connector which is directly attached to an assembly located outside the structural framework and which acts as a control and management circuit for the power that flows through the solar panels, while the other connector is attached to one of the ends of a second floating conductor section which, at the other end, and through another swivel connector item, is attached to a third floating conductor section which is also connected, by means of a swivel connector, to such external assembly which acts as a control circuit of the structural framework and serves to manage the solar energy that flows through the solar panel layout.

ES 1 066 131, "Single-column adjustable structure", describes a single-column adjustable structure which comprises a column (2) which is anchored to the ground, wherein its highest point comprises a collapsible superstructure (3) which can rotate following an azimuth direction, comprising a rotating head which houses arms with articulated beams that support a series of straps where a series of items, such as solar panels, are mounted; wherein the electronic control of such movements has been implemented; wherein the ends of said beams are articulated by means of ball joints, while the loads are symmetrically distributed throughout the beams, in order to transfer to the ends of such arms only vertical cutting efforts, to absorb minor twists caused by the wind and thermal expansion and to increase the contact surface area at the joints.

### Description of the invention

The supporting system for parabolic troughs disclosed by the invention solves in a fully satisfactory manner the problems previously mentioned, allowing the design of very large parabolic troughs, which are easily self-orientated, perfectly stabilised and that can be adapted to the orography of the ground.

To that effect, and on the basis of the parabolic design of this type of collectors, the invention is based on the fact that the lower central area of the collector lies on a ball joint which is associated to the relevant frame, and to an ancillary pillar that will transfer the weight of the parabolic structure to the relevant foundations, with the peculiarity that a series of hydraulically operated arms have been distributed around such ball joint, matching two imaginary concentric rings, such arms being equiangularly arranged with respect to the axis of the paraboloid; such hydraulically operated arms are attached, by means of a series of joints located at their respective ends, to the collector and to the ground foundations, and the synchronized extension and retraction of such arms allows regulating the orientation of the collector.

More specifically, and matching the imaginary inner ring of a smaller diameter, there at least eight hydraulically operated arms have been arranged while, matching the outer ring, the number of arms doubles the number of arms arranged within the inner ring, i.e., at least sixteen arms. Such outer arms are equiangularly offset with respect to the inner arms, to obtain a more homogeneous distribution of forces.

In a preferred embodiment of the invention, there are eight hydraulically operated arms that match the inner ring, while in the case of the outer ring, the number of arms is sixteen.

Also, in the supporting system according to the invention, the outer perimeter circumference of the parabolic trough is connected with wires at least to four towers, always an even number, that are opposed two by two by the diameters. These wires, thanks to the ancillary braking means, will serve to conveniently stabilize the system.

In another preferred embodiment, the supporting system according to the invention comprises six of the above mentioned perimeter towers that are opposed two by two by the diameters, which configure an imaginary regular hexagon whose corners coincide around the parabolic trough.

Specifically, the towers are linked two by two by a cable which depicts a closed path, and which can be moved thanks to a series of sets of pulleys; such cable is attached to the outer perimeter circumference of the parabolic trough at two points that are diametrically opposed, so that the movement of the cable in a given direction will entail an upwards traction movement in one of the points where it is attached to the collector, while the effect achieved at the opposite side will be the contrary, and vice versa. Thus, by regulating the pair of closed cables of each pair of diametrically opposed towers, it is possible to adapt the system to the angle of inclination foreseen in each case, and the cables will remain at all times perfectly tightened, thus achieving an optimum stabilisation of the parabolic trough.

As far as the operation of the cables is concerned, once their position has been regulated, it has been foreseen that, matching the base of each tower, a series of means are installed to regulate the braking/locking of the cables, to prevent their movement, such means consisting of a hydraulic clamp which the cable crosses through during the initial and the return runs, such clamp being fixed to the tower,

Thus, the operation of the hydraulic clamp locks the cable, preventing its movement and, consequently, provides great stability to the collector by means of the supporting system according to the invention, thanks to this pair of cables that allow to adjust the collector on the basis of two imaginary orthogonal axes whose point of intersection coincides with the vertex of the trough.

### Description of the figures:

In order to supplement this description, and to better understand the characteristics of the invention, according to a preferred exemplary embodiment, a set of drawings has been attached to this description as an integral part of it where, for illustration purposes, and without limitation, the following has been represented:

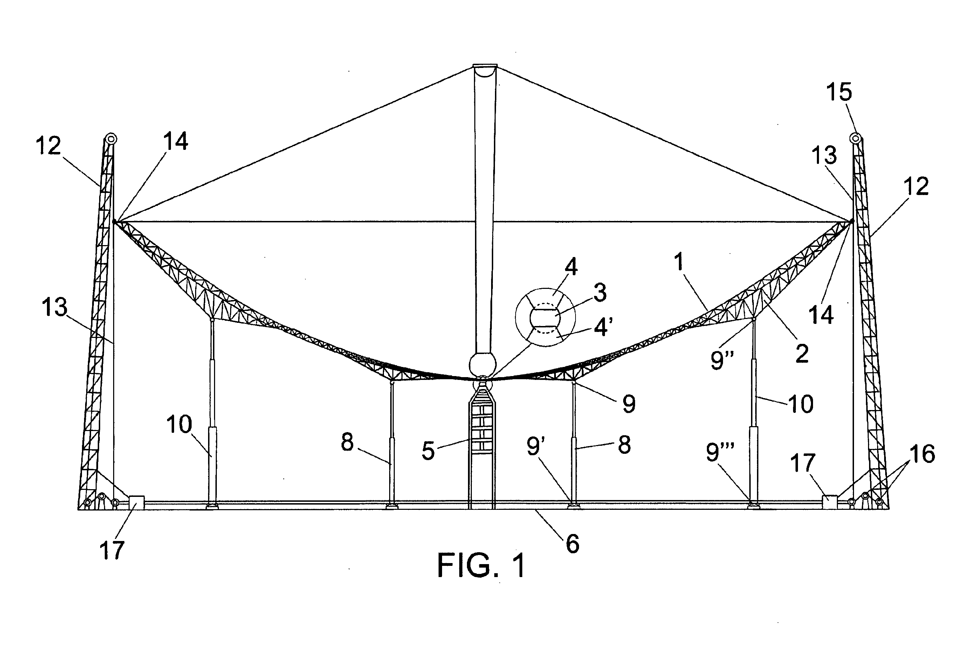

- Figure 1:: Shows a vertical cross section of the supporting system for parabolic troughs according to the object of this invention.
- Figure 2:: Shows a plan view arrangement of the arms that regulate the orientation of the collector.
- Figure 3:: Shows a detailed perspective view of the braking means provided by the stabilization system for the cable-operated stabilization system.

### Exemplary embodiment of the invention

In the light of the above mentioned figures, it can be appreciated that the supporting system according to the invention is based on a conventional design which is valid for any type of parabolic solar collectors where a parabolic surface has been defined to concentrate the solar radiation (1) such surface being supported by another structure (2), which has also a parabolic structure (2) that incorporates in its vertex an articulated ball joint (3) comprising two conical sockets (4-4') that have been coupled to the structure (2) and to a pillar (5) attached to the foundations (6), respectively.

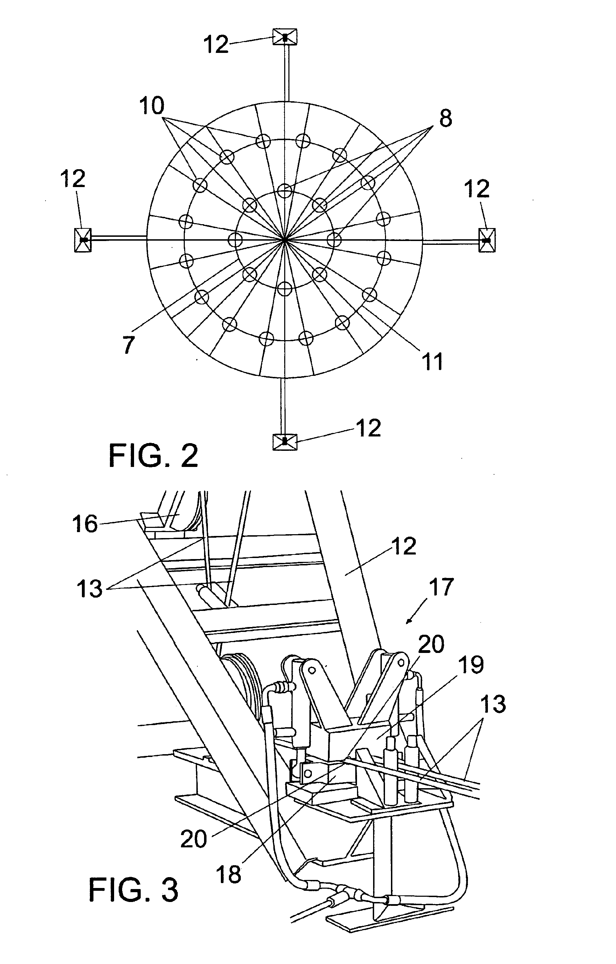

As it can be observed in Figure 2, at least eight hydraulically operated arms (8) have been arranged on an imaginary inner ring (7) and twice as much this number in the case of the hydraulically operated arms (10) arranged around an outer ring (11), wherein each pair of arms of the outer ring forms an isosceles triangle along with the matching arms of the inner ring, that form the vertex angle of the triangle, the arms (8) of the inner ring being coupled, by means of joints (9-9') both to the structure (2) and to the floor or the foundations (6), such arms being conveniently regulated from the relevant hydraulic control unit; the arms (10) of the outer ring (11) are arranged following an staggered pattern with respect to those previously mentioned, and they are connected by means of ball joints (9"-9"') to the structure (2) and to the floor, similarly as the first set of hydraulic arms (8).

Furthermore, the system according to the invention comprises at least four towers (12), and preferably six towers, that are arranged following a diametrically opposed pattern two by two, and which are connected by means of a cable (13), and located at a considerable height. This way, the cable (13) depicts a closed path and is connected to the structure (2) at two peripheral anchoring points (14) which are diametrically opposed, so that, if we take such anchoring point as the starting point of the cable run, the cable will trace a rising path to go through an upper pulley (15) of the nearest tower (12) to descend through such tower until it reaches the base of the tower; then, it passes through a set of pulleys (16) that arrange it horizontally near the ground, so that it may cross a braking means (17) and go towards the opposite tower, cross the ancillary set of pulleys (16), rise inside the tower up to the upper pulley (15), and fall to the opposite anchoring point (14), to fall again towards the set of pulleys (16), and extend horizontally towards the first tower, crossing the above mentioned braking means (17), and finally, adopt a rising trajectory through the set of pulleys (16) and close the path at the anchoring point (14).

This design and operation is repeated in an identical manner for ach pair of opposed towers.

Optionally, the installation of a motor in some of the pulley groups described above may help to adjust the cable on one or another direction and, consequently, the orientation of the collector.

According to the detail shown in Figure 3, the braking means (17) comprise a hydraulically operated clamp comprising, both in their fixed part (18), and in their movable part (19) a pair of half-round grooves (20), through which the cable (13) crosses both during the coming and going trajectories, so that, in the idle state, the cable is not braked by the clamp and, once the position required by the collector has been reached, the clamp is operated and its mobile part (19) locks both cable sections (13) by pressing it against the fixed part (18).

## Claims

1. Supporting system for parabolic solar thermal collectors of the trough type, **characterized in that** the vertex of the collector structure (2) rests on a ball joint (3) which connects it with the ground or the foundations, and around such joint, and matching two concentric imaginary rings, there are at least eight hydraulically operated arms (8) within the inner ring and twice the number of hydraulically operated arms (10) at the outer ring, and every pair of arms of the outer ring forms an isosceles triangle with the relevant pair of arms of the inner ring, which forms the acute vertex; all of them are connected to the collector and to the relevant foundations by means of articulated joints and, furthermore, it has been foreseen that the system is supplemented at least with four towers (12), and preferably, always in an even number, six towers, connected together two by two trough a cable (13), which are diametrically opposed outside the collector, so that each cable (13) describes a closed path, and it is connected to the structure (2) at two anchoring points (14) arranged in the periphery and diametrically opposed, passing through a plurality of pulleys connected to the lower and upper ends, respectively, of each one of the opposed towers; the cable, when crossing these pulleys, passes through a braking means (17).

2. Supporting system for parabolic solar thermal collectors of the trough type according to claim 1, **characterized in that** the braking means (17) comprise a hydraulically operated clamp connected to the tower itself (12).
